# EUROPÄISCHE PATENTSCHRIFT

(11) **EP 1 084 877 B1**
(45) Veröffentlichungstag und Bekanntmachung des Hinweises auf die Patenterteilung: **11.10.2006**
(21) Anmeldenummer: 00115958.1
(22) Anmeldetag: 26.07.2000
(51) Int. Cl.: B60H 1/34

(54) **Luftausströmer für den hinteren Fahrgastraum in Kraftfahrzeugen**
Air diffuser for the rear part of a vehicle passenger compartment
Diffuseur d'air pour la partie arrière de l'habitacle d'un véhicule

(30) Priorität: 14.09.1999 DE 19943876
(43) Veröffentlichungstag der Anmeldung: 21.03.2001
(73) Patentinhaber: Volkswagen AG, 38436 Wolfsburg (DE)
(72) Erfinder: Sans, Michael, 38104 Braunschweig (DE); Bachorski, Tomasz, 59077 Hamm (DE); Reim, Ernst, 38102 Braunschweig (DE)

(56) Entgegenhaltungen:
- EP-A- 0 881 109
- WO-A-98/29272
- DE-A- 4 446 708
- DE-C- 874 562
- DE-U- 29 716 410
- FR-A- 2 650 225
- US-A- 5 063 833

## Beschreibung

Die Erfindung betrifft einen Luftausströmer für den Fahrgastraum in Kraftfahrzeugen, mit mindestens einer in luftstromschlüssiger Verbindung mit einem Gebläse stehenden Austrittsöffnung, welche mit mindestens einer neigbaren/kippbaren Strömungslamelle versehen ist bzw. sind, wobei die Lamelle bzw. die Lamellen zumindest nahezu vollständig innerhalb oder hinter der Austrittsöffnung angeordnet ist bzw. sind, und dass die Neigungs- oder Kipplagerung der Lamelle bzw. der Lamellen, weit hinter der Austrittsöffnung liegt bzw. liegen.

Luftausströmer dieser Art werden in Kraftfahrzeugen zumeist, wenn auch nicht ausschließlich, mittig in der Armaturentafel angeordnet. Diese Luftausströmer dienen zur Belüftung, ggfs. auch Kühlung und Heizung des Fahrgastraumes. Zusätzliche Luftausströmer befinden sich in der Regel auch im Fußraum, sowie ggfs. auch im Bereich der Seitenränder der Armaturentafel, zur Belüftung der Seitenscheiben. Bei Normaleinstellung der Belüftungsverteilung im Kraftfahrzeug werden die mittleren Belüftungsdüsen in der Regel am meisten beansprucht. Sie sorgen zum einen für Frischluft und ggfs. für Kühlung und zum anderen zur Beheizung. Die Luftausströmer sind hinter der Armaturentafel mit entsprechenden Luftanschlüssen, Luftleitungen bzw. Schläuchen verbunden. An der Oberfläche der Armaturentafel bzw. im Bereich der Austrittsöffnungen sind überdies neigbare oder kippbare Lamellen vorgesehen, mit deren Hilfe die Strömungsrichtung bestimmt werden kann. Von einer Mittelposition ausgehend, bei der in der Regel eine Mehrzahl von übereinanderliegenden Lamellen parallel angeordnet sind, strömt die ankommende Luft aus. Die Lamellen sind in der Mittelposition so ausgerichtet, dass dieselben in horizontalen ungeneigten parallelen Ebenen liegen. Zumeist sind Verstellmittel, die an den Lamellen in Form von angeformten oder angebrachten Griffen vorgesehen. Diese können nur nach oben oder unten verstellt werden. Beim Vorhandensein mehrerer Lamellen sind dieselben entsprechend gekoppelt, so dass nur der Griff an einer Lamelle zur gleichzeitigen parallelen Verstellung aller Einzellamellen insgesamt betätig werden muss.

In der Regel ragen die Lamellen aus der Luftaustrittsöffnung heraus. Durch eine solche Bauweise ergeben sich großvolumige Luftausströmer, die einen entsprechenden Platzbedarf in der Armaturentafel beanspruchen. Bei der Einstellung höherer Strömungsgeschwindigkeiten, durch eine entsprechende Betätigung des Gebläses, entwickeln Luftausströmer dieser Bauart relativ hohe Strömungsgeräusche. Auch diese sind störend. Dies betrifft insbesondere die elektronische Klimaregelung im Fahrzeug, die beispielsweise bei höherer Sonneneinstrahlung und höheren Außentemperaturen gekühlte Luft mit größerer Austrittsgeschwindigkeit befördert. Störend wirken die entsprechenden Geräusche nicht nur im Fahrbetrieb, sondern behindern auch das Hören von Beiträgen aus der Audioanlage oder beim Führen von Telefonaten über die Freisprechanlage.

Aus diesem Grund werden in jüngster Zeit vermehrt Luftausströmer eingesetzt, bei denen die Lamellen innerhalb oder hinter der Austrittsöffnung, von der Fahrgastzelle aus gesehen, angeordnet sind. Eine solche Anordnung, die beispielsweise aus der DE 874 562 A bekannt ist, hat den Vorteil, dass die Lamellen nicht mehr aus der Austrittsöffnung herausragen, wodurch die Anströmung der Lamellen von hinten, weit hinter der Austrittsöffnung, vorgenommen wird, was entstehende Windgeräusche deutlich minimiert. Weitere Windgeräusche entstehen aber auch im Bereich des die Lamellen lagernden Mechanismusses, insbesondere dann, wenn dieser Mechanismus, beispielsweise eine Neigungs- oder Kipplagerung der Lamelle, wie sie in der EP 0 881 109 A1 und der WO 98/29272 beschrieben ist, innerhalb der Austrittsöffnung vorgesehen ist. Zur weiteren Reduzierung der Windgeräusche ist es daher bekannt, die Neigungs- und Kipplagerung der Lamellen deutlich hinter der Austrittsöffnung vorzusehen. So beschreibt die US 5,063,833, die DE 297 16 410 U1 und die DE 44 46 708 A1 Luftausströmer, bei denen nicht nur die Lamellen, sondern auch deren Lagerungsmechanismus im Innern des Ausströmkanals beabstandet zur Austrittsöffnung angeordnet ist. Einen ähnlichen Aufbau zeigt auch die FR 2 650 225 A, bei der die jeweilige Neigungsachse bezogen auf den Querschnitt der Lamelle mittig verläuft.

Zwar ist ein Vorteil einer Anordnung der Lamellen im Bereich hinter der Austrittsöffnung, das heißt im Innern des Luftausströmkanals, dass die Bauform des Luftausströmers insgesamt kleiner ausfällt. Allerdings steigen die Windgeräusche mit zunehmender Verkleinerung des Gehäuses des Luftausströmers und damit des Ausströmkanals und der Austrittsöffnung wieder an.

Der Erfindung liegt die Aufgabe zugrunde, eine Luftausströmung der gattungsgemäßen Art dahingehend weiterzubilden, dass bei kleiner kompakter Bauform Wind-oder Strömungsgeräusche weiter reduziert werden.

Wichtig ist hierbei die gestellte Doppelaufgabe zu erkennen, die darin besteht, dass bei gleichzeitig kleinbauender Konstruktion dennoch die Windgeräusche reduziert werden. Rein strömungstechnisch entsteht hierbei ein scheinbarer Widerspruch. Bei einer Verkleinerung des Luftausströmers reduziert sich natürlich gegenüber bekannten Luftausströmern der effektive Luftaustrittsquerschnitt. Dies bewirkt gemäß der Kontinuitätsgleichung bei gleicher Luftmengenförderung eine höhere Strömungsgeschwindigkeit, die wiederum in Luftausströmern bekannter Art höhere Windgeräusche erzeugen würde.

Der erfindungsgemäße Luftausströmer hingegen erzielt bei Verkleinerung des effektiven Querschnittes durch seine spezifische erfindungsgemäße Bauart dennoch auch eine deutliche Reduktion der Windgeräusche. D.h., der erfindungsgemäße Luftausströmer ist in seiner Bauart relativ klein und erzeugt dennoch weniger Windergeräusche als die aus dem Stand der Technik bekannten Luftausströmer.

Dies wird dadurch erreicht, dass die Neigungs- oder Kipplagerung bezogen auf den Querschnitt der Lamelle bzw. der Lamellen an der hinteren Anströmkante verläuft.

Dies wiederum bedeutet, dass die besagte Kipplagerung oder Neigungslagerung näher an der Anströmkante angeordnet ist, als dies bei Luftausströmern bekannter Bauart der Fall ist.

Hierdurch entsteht eine weitere Reduktion der entstehenden Windgeräusche, insbesondere auch in dem Fall, dass die Lamelle oder die Lamellen nicht mehr in einer horizontalen Ebene liegen sondern entweder nach oben oder nach unten geneigt angestellt sind. Die Anströmkante wird, weil die Neigungsachse nahe derselben angeordnet ist, gegenüber der Mittelstellung nicht mehr oder kaum noch angehoben oder abgesenkt. Insofern arbeiten die Lamellen wie Strömungskörper, die nunmehr vollständig in den sozusagen entstehenden Windkanal integriert sind. Es werden dabei Turbulenzen außerhalb der ungeführten Luftströmung, also außerhalb der Austrittsöffnung vermieden, indem die als Strömungskörper profilierten Lamellen gänzlich innerhalb einer Wandung im strömungsgeführten Bereich der Luftströmung befinden. In diesem Bereich ist die Luftströmung somit bis hin zu höheren Strömungsgeschwindigkeiten erheblich laminarer als außerhalb der Austrittsöffnung.

Da bei Luftausströmern der bekannten Bauart die Neigungsachse der Lamellen weit von der Anströmkante entfernt ist, häufig sogar an der der Anströmkante gegenüberliegenden Abrisskante vorgesehen ist, entstehen dort Turbulenzen, die wiederum Geräusche erzeugen. Mit der Erzeugung von Turbulenzen werden jedoch nicht nur Geräusche erzeugt, sondern eine turbulente Strömung reduziert, die effektive Windgeschwindigkeit, so dass relativ große Querschnitte notwendig sind, um eine betreffende Luftmenge pro Zeiteinheit ausströmen lassen zu können. Beim Luftausströmer der erfindungsgemäßen Art hingegen wird durch die Erzielung einer laminaren Strömung auch im Bereich der Lamellen, durch welche die Strömung gelenkt werden kann, bei hohen Volumendurchsätzen die Geräuschentwicklung stark reduziert.

Vorteilhafte Ausgestaltungen sind Gegenstand der Unteransprüche und werden im folgenden beschrieben.

Gemäß einer vorteilhaften Ausgestaltung ist angegeben, dass die Austrittsöffnung rechteckig oder oval ist und in der Armaturentafel mit der langen Achse horizontal angeordnet ist. Hierdurch ergibt sich eine flache Bauform, die einen erheblich geringeren Platzbedarf in der Vertikalen, der Mittelkonsole oder der Armaturentafel benötigt, als dies Luftausströmer der bekannten Art tun.

In weiterer vorteilhafter Ausgestaltung ist angegeben, dass in die Austrittsöffnung ein Rechteck- oder Ovalrohrabschnitt aus metallischem Werkstoff eingebracht ist, der zum einen die randseitige Begrenzung der Austrittsöffnung darstellt und zum zweiten sich bis hinter die nach innen erstreckenden Lamellen erstreckt. Durch die Einbringung eines solchen Oval- oder Rechteckabschnittes, der bis an oder bis hinter die Lamellentiefe reicht, wird die laminare Strömung in der oben beschriebenen Weise begünstigt.

Am hinteren Ende des Rechteck- oder Ovalrohrabschnittes ist die Luftzuführungsleitung in Form eines entsprechenden Schlauches angeschlossen.

Weiterhin besteht eine vorteilhafte Ausgestaltung darin, dass der Rechteck- oder Ovalrohrabschnitt mit einer um die Austrittsöffnung herum angeordneten Frontblende verbunden ist, in welcher Betätigungselemente für die Lamellenneigung angeordnet sind. Vorzugsweise ist dabei der Oval- oder Rechteckrohrabschnitt im Bereich um die Austrittsöffnung aerodynamisch abgerundet. Ebenso können die Lamellen oder die Lamelle an ihrer vorderen, in die Austrittsöffnung mündenden Seite ebenfalls aerodynamisch geformt sein. Vorzugsweise betrifft dies auch, jedoch in entsprechender Weise, die hintere Seite an der Lamelle. Dies bedeutet mit anderen Worten, dass die Anströmseite der Lamelle entsprechend bauchig angeformt ist und somit das strömungstechnisch günstigste Anströmprofil bildet. An der vorderen Seite der Lamelle ist dieselbe im Querschnittsprofil betrachtet ebenfalls abgerundet, jedoch mit erheblichen geringerem Radius als die Anströmkante im hinteren Bereich. Somit ergibt sich im Profil eine Kontur, die an die Kontur einer Tragfläche eines Flugzeuges erinnert. Jedoch fehlt bei der Querschnittskontur die entsprechende Krümmung entlang der Tragflächenlinie, weil ansonsten innerhalb des Luftausströmers wiederum ein Auftrieb erzeugt würde, der in diesem Bereich wiederum Turbulenzen und somit Windgeräusche, erzeugen würde. Der Luftausströmer der erfindungsgemäßen Art hat somit eine Lamelle mit einer Querschnittskontur, die weitestgehend symmetrisch ist und der eines perfekten Strömungskörpers gleicht.

Vorzugsweise enthält der Luftausströmer lediglich eine Lamelle, die mittig angeordnet ist. Es können aber auch mehrere parallele Lamellen vorgesehen sein, welche neigungsmäßig jedoch miteinander gekoppelt sind.

Vorzugsweise sind Lamellenachswellen vorgesehen, welche parallel zur Neigungsachse durch die Lamellen hindurch verlaufen und mit nach außen geführten Verstellmitteln verbunden sind.

Dabei können die Verstellmittel handbetätigbar sein oder aber sie können elektromotorisch beaufschlagt werden. Im Falle eines Handbetriebes können Zahnstangenelemente vorgesehen sein, die über einen kurzen Teilabschnitt an der hinteren Seite der Lamelle angeordnete Zahnsegmente aufweisen, die in eine vertikal bewegbare Zahnstange hineingreifen.

Es ist jedoch auch möglich, wie oben beschrieben, sogenannte Lamellenachswellen nach außen zu führen. Die Verstellmittel befinden sich dann außerhalb der Luftausströmer.

Vorzugsweise sind Betätigungselemente in der Frontblende integriert, welche beispielsweise elektrische Tastschalter zur Betätigung des Elektromotors sein können.

Die Erfindung ist in der Zeichnung dargestellt und nachfolgend näher beschrieben.

Es zeigt:
Figur 1: Erfindungsgemäßer Luftausströmer in Frontalansicht.
Figur 2: Erfindungsgemäßer Luftausströmer in Seitenschnittansicht.
Figur 3: Erfindungsgemäßer Luftausströmer mit Lamellenzahnstangenantrieb.
Figur 4: Erfindungsgemäßer Luftausströmer mit mehreren Lamellen.

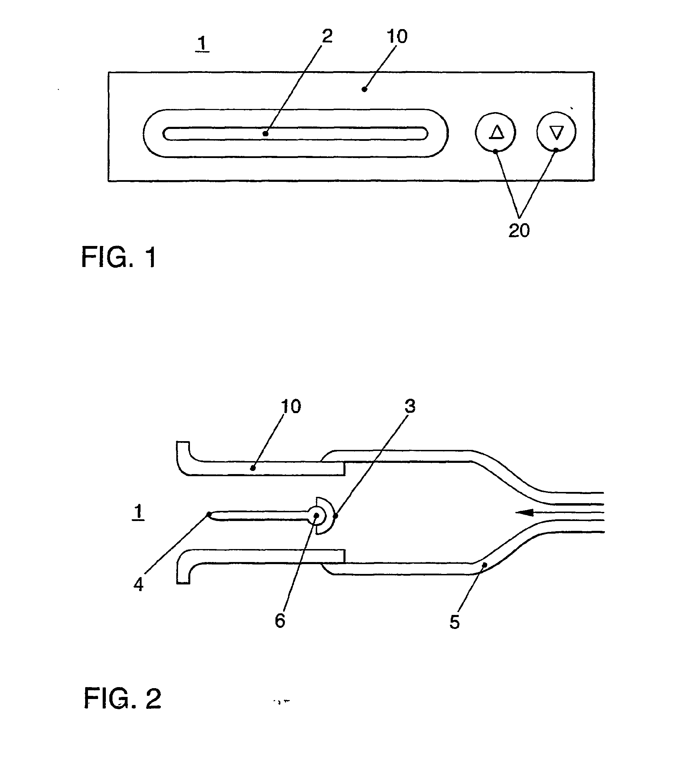

Figur 1 zeigt in frontaler Ansicht den erfindungsgemäßen Luftausströmer. Besonders deutlich wird hierbei, dass derselbe extrem flach bauend ist.

Wichtig ist hierbei, dass trotz einer auch flächenmäßig kleineren Ausströmöffnung die dadurch produzierten höheren Strömungsgeschwindigkeiten dennoch geräuschreduziert sind, gegenüber herkömmlichen Luftausströmern. Dies geschieht durch eine entsprechende Konturierung des Luftausströmers

im Bereich der Ausströmöffnung. In der Ausströmöffnung bzw. dahinter liegend ist eine Lamelle 2 platziert. Der Luftausströmer dieser Bauart hat somit nur eine mittlere Lamelle. Diese ist, wie oben bereits beschrieben und in den nachfolgenden Zeichnungen deutlicher zu erkennen, entsprechend konturiert. Die Konturierung der Ausströmöffnung sowie der Lamelle 2 erzielen dabei aus aerodynamischer Sicht die deutliche Reduktion der entstehenden Wind- oder Strömungsgeräusche. Der Luftausströmer 1 enthält eine zusammenhängende Frontblende 10, auf der auch noch Verstellschalter 2 für die Einstellungen der Lamellen nach oben und nach unten angeordnet sind. Bei einer Bauform, wie hier dargestellt, werden elektrische Verstellmittel für die Lamelle 2 verwendet. Die Frontblende 10 des Luftausströmers 1 ist dabei derartig einstückig mit dem nach innen sich fortsetzenden ovalen Rohrabschnitt verbunden, dass derselbe somit am Luftausströmer 1 wie eine Trompete ausmündet. Das bedeutet abgerundete Kanten, an denen Turbulenzen vermieden werden. Mit der Vermeidung von Turbulenzen werden natürlich auch die Windgeräusche erheblich reduziert.

Figur 2 zeigt eine Schnittdarstellung durch den erfindungsgemäßen Luftausströmer 1 in seitlicher Darstellung. Hierbei ist noch einmal die Frontblende 10 zu erkennen, die auch den nach innen weisenden Rohransatz oder Rohrabschnitt bildet. Mittig dazu verlaufend ist die Lamelle 2 platziert. Erfindungsgemäß ist die Lamelle 2 gänzlich hinter die Austrittsöffnung des Luftausströmers 1 plaziert bzw. in dem entsprechenden Rohrabschnitt hinein untergebracht. Es ragt somit die vordere Ausströmkante 4 der Lamelle 2 nicht mehr aus der Austrittsöffnung des Luftausströmers 1 heraus. Die hintere Seite der Lamelle 2 ist als hintere Anströmkante 3 bezeichnet. Diese hintere Anströmkante 3 ist dabei mit relativ großem Radius gerundet. Dagegen ist die vordere Ausströmkante 4 ebenfalls gerundet, jedoch mit sehr viel kleinerem Radius. Insgesamt ergibt sich somit ein nahezu idealisierter Strömungsquerschnitt mit einer relativ runden Anströmkante und einer relativ spitzen Ausströmkante. Durch die Tatsache, dass die Frontblende 10 als Ovalrohrabschnitt in den Luftausströmer hinein gezogen wird und diese erst hinter der hinteren Anströmkante 3 endet und dort mit dem Luftanschluss verbunden ist, hat die Wirkung, dass im Bereich des als Störkörper zu definierenden Lamelle 2 randseitig eine laminare Strömung vorgegeben wird. Durch die entsprechende Strömungskörperquerschnittskontur der Lamelle 2 wird auch im Bereich der Lamelle die Strömung durch den annähernd perfekten Strömungskörperquerschnitt laminar gehalten.

Bei Luftausströmern bekannter Art sind die Lamellen lediglich flach konturiert, mit nur wenig abgerundeten Kanten, so dass sie zwar je nach Neigung den Luftstrom lenken, jedoch Turbulenzen erzeugen, die wiederum erhebliche Strömungsgeräusche oder Windgeräusche erzeugen. Beim erfindungsgemäßen Luftausströmer wird der Luftstrom durch die entsprechende Konturierung laminar gehalten und damit geräuschreduziert. Die Neigungsachse 6 der Lamelle 2 ist dabei nahe der hinteren Anströmkante 3, so dass diese sich auch bei Neigung der Lamelle 2 nach wie vor nahezu an gleicher Stelle, also mittig im Strömungsquerschnitt verbleibend, befindet.

Durch die Neigungsachse 6 kann nun eine hier nicht weiter dargestellte Neigungsbetätigungswelle hindurch verlaufend angeordnet sein, mit welcher man dann außerhalb des Luftausströmers 1 die Neigung der Lamellen 2 einstellen kann.

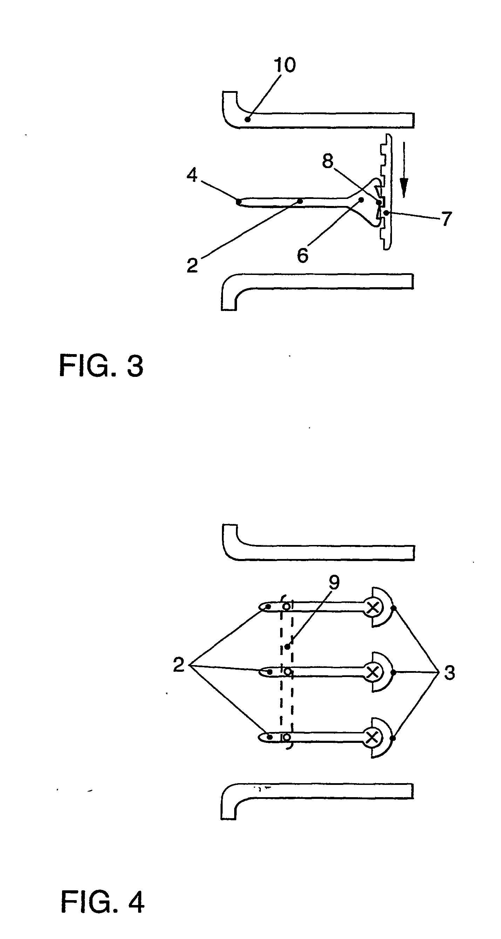

Figur 3 zeigt ein Ausführungsbeispiel, bei welchem die Betätigung, d.h, die Neigungsbetätigung der Lamelle 2, durch eine Zahnstange 7 erfolgt, die über mechanische Mittel auf- und abwärts bewegbar ist, und die auf Zahnelemente 8 einwirken, die mit der Lamelle 2 verbunden sind. Die Zahnelemente sowie die Zahnstange sind dabei nur an einem Punkt der Längserstreckung und somit nicht über den gesamten Strömungsquerschnitt verteilt angeordnet, da dort wiederum lokal Turbulenzen entstehen.

Figur 4 zeigt die Anordnung dreier Lamellen übereinander, die jeweils eine Betätigung und eine Anströmkante 3, wie in Figur 2, aufweisen. Dieselben sind parallel angeordnet und über ein Kopplungselement 9 miteinander verbunden, so dass auch bei Bewegung oder Betätigung nur einer Lamelle 2 die übrigen Lamellen parallel mitbewegt werden.

## Patentansprüche

1. Luftausströmer für den Fahrgastraum in Kraftfahrzeugen, mit mindestens einer in luftstromschlüssiger Verbindung mit einem Gebläse stehenden Austrittsöffnung, welche mit mindestens einer neigbaren/kippbaren Strömungslamelle versehen ist bzw. sind, wobei die Lamelle (2) bzw. die Lamellen, zumindest nahezu vollständig innerhalb oder hinter der Austrittsöffnung angeordnet ist bzw. sind, und dass die Neigungs- oder Kipplagerung (6) der Lamelle bzw. der Lamellen, weit hinter der Austrittsöffnung liegt bzw. liegen, **dadurch gekennzeichnet, dass** die Neigungs- oder Kipplagerung (6) bezogen auf den Querschnitt der Lamelle (2) bzw. der Lamellen an der hinteren Anströmkante (3) verläuft.

2. Luftausströmer nach Anspruch 1, **dadurch gekennzeichnet, dass** in die Austrittsöffnung ein Rechteck- oder Ovalrohr aus metallischem Werkstoff eingebracht ist, das zum einen die randseitige Begrenzung der Austrittsöffnung darstellt und zum zweiten sich bis hinter die nach innen erstreckte Lamelle bzw. Lamellen (2) erstreckt.

3. Luftausströmer nach Anspruch 2, **dadurch gekennzeichnet, dass** am hinteren Ende des Rechteck-oder Ovalrohrabschnittes die Luftzuführungsleitung (5) angeschlossen ist.

4. Luftausströmer nach einem der vorhergehenden Ansprüche, **dadurch gekennzeichnet, dass** der Rechteck-oder Ovalrohrabschnitt mit einer um die Austrittsöffnung herum angeordneten Frontblende (10) verbunden ist, in welcher Betätigungselemente (20) für die Lamellenneigung angeordnet sind.

5. Luftausströmer nach einem der vorhergehenden Ansprüche, **dadurch gekennzeichnet, dass** der Oval-oder Rechteckrohrabschnitt im Bereich um die Austrittsöffnung herum aerodynamisch abgerundet ist.

6. Luftausströmer nach einem der vorhergehenden Ansprüche, **dadurch gekennzeichnet, dass** die Lamelle (2) bzw. die Lamellen entlang ihrer vorderen, in die Austrittsöffnung mündenden Seite aerodynamisch geformt ist bzw. sind.

7. Luftausströmer nach einem der vorhergehenden Ansprüche, **dadurch gekennzeichnet, dass** die Lamelle (2) bzw. die Lamellen an der hinteren, der anströmenden Luft zugewandten Seiten aerodynamisch geformt ist bzw. sind.

8. Luftausströmer nach einem der vorhergehenden Ansprüche, **dadurch gekennzeichnet, dass** eine Lamellenachswelle vorgesehen ist, welche parallel zur Neigungsachse (6) platziert ist und mit Verstellmitteln verbunden ist.

9. Luftausströmer nach Anspruch 8, **dadurch gekennzeichnet, dass** die Verstellmittel mittels Elektromotor betätigbar sind.

10. Luftausströmer nach Anspruch 9, **dadurch gekennzeichnet, dass** die Betätigungselemente (20) als elektrische Tastschalter zur Betätigung des Elektromotors ausgebildet sind, welche in der Frontblende angeordnet sind.

## Claims

1. Air outlet for the passenger compartment in motor vehicles, having at least one outlet aperture which is/are connected to the air flow from a blower and which is/are provided with at least one inclinable/tilting flow vane, the vane (2) or the vanes being arranged at least almost entirely inside or behind the outlet aperture, and the inclination or tilt bearing (6) of the vane or vanes being situated far behind the outlet aperture, **characterized in that** the inclination or tilt bearing (6), in relation to the cross section of the vane (2) or the vanes, runs at the rear leading edge (3).

2. Air outlet according to Claim 1, **characterized in that** a rectangular or oval tube of metallic material is introduced into the outlet aperture, the tube firstly constituting the defining edge of the outlet aperture and secondly extending to behind the inwardly extended vane or vanes (2).

3. Air outlet according to Claim 2, **characterized in that** the air feed line (5) is connected to the rear end of the rectangular or oval tube section.

4. Air outlet according to any one of the preceding Claims, **characterized in that** the rectangular or oval tube section is connected to a front cover (10) arranged around the outlet aperture and in which actuating elements (20) for the vane inclination are arranged.

5. Air outlet according to any one of the preceding Claims, **characterized in that** the oval or rectangular tube section is aerodynamically rounded in the area around the outlet aperture.

6. Air outlet according to any one of the preceding Claims, **characterized in that** the vane (2) or the vanes is/are aerodynamically shaped along its/their front side opening into the outlet aperture.

7. Air outlet according to any one of the preceding Claims, **characterized in that** the vane (2) or the vanes is/are aerodynamically shaped at its/their rear sides facing the incident air.

8. Air outlet according to any one of the preceding Claims, **characterized in that** a vane axial shaft is provided, which is located parallel to the axis of inclination (6) and is connected to means of adjustment.

9. Air outlet according to Claim 8, **characterized in that** the means of adjustment can be actuated by an electric motor.

10. Air outlet according to Claim 9, **characterized in that** the actuating elements (20) take the form of electric push-button switches for actuation of the electric motor which are arranged in the front cover.

## Revendications

1. Diffuseur d'air pour l'habitacle de véhicules automobiles, comprenant au moins une ouverture de sortie connectée par écoulement d'air à une soufflante et pourvue d'au moins une lamelle d'écoulement inclinable/basculante; la lamelle (2) ou les lamelles. étant disposées au moins pratiquement complètement à l'intérieur ou derrière l'ouverture de sortie, et le support d'inclinaison ou de basculement (6) de la lamelle ou des lamelles étant situé largement derrière l'ouverture de sortie, **caractérisé en ce que** le support d'inclinaison ou de basculement (6) s'étend, par rapport à la section transversale de la lamelle (2) ou des lamelles, contre le bord d'afflux arrière (3).

2. Diffuseur d'air selon la revendication 1, **caractérisé en ce qu'**un' tube rectangulaire ou ovale en matériau métallique est installé dans l'ouverture de sortie et constitue d'une part la limite du côté du bord de l'ouverture de sortie et d'autre part s'étend jusque derrière la lamelle ou les lamelles (2) s'étendant vers l'intérieur.

3. Diffuseur d'air selon la revendication 2, **caractérisé en, ce que** la conduite d'amenée d'air (5) est raccordée à l'extrémité arrière de la portion de tube rectangulaire ou ovale.

4. Diffuseur d'air selon l'une quelconque des revendications précédentes, **caractérisé en ce que** la portion de tube rectangulaire ou ovale est connectée à un panneau avant (10) disposé autour de l'ouverture de sortie, dans lequel sont disposés des éléments de commande (20) pour l'inclinaison des lamelles.

5. Diffuseur d'air selon l'une quelconque des revendications précédentes, **caractérisé en ce que** la portion de tube rectangulaire ou ovale est arrondie de manière aérodynamique dans la région autour de l'ouverture de sortie.

6. Diffuseur d'air selon l'une quelconque des revendications précédentes, **caractérisé en ce que** la lamelle (2) ou les lamelles sont formées de manière aérodynamique le long de leur côté avant débouchant dans l'ouverture de sortie.

7. Diffuseur d'air selon l'une quelconque des revendications précédentes, **caractérisé en ce que** la lamelle (2) ou les lamelles sont formées de manière aérodynamique au niveau des côtés arrière tournés vers l'air affluant.

8. Diffuseur d'air selon l'une quelconque des revendications précédentes, **caractérisé en ce qu'**il est prévu un axe de lamelle qui est placé parallèlement à l'axe d'inclinaison (6) et qui est connecté à des moyens de réglage.

9. Diffuseur d'air selon la revendication 8, **caractérisé en ce que** les moyens de réglage peuvent être actionnés au moyen d'un moteur électrique.

10. Diffuseur d'air selon la revendication 9, **caractérisé en ce que** les éléments de commande (20) sont réalisés sous la forme de commutateurs à touche électriques pour la commande du moteur électrique, qui sont disposés dans le panneau avant.
